# EUROPEAN PATENT APPLICATION

(11) **EP 4 173 482 A1**
(43) Date of publication of application: **03.05.2023**
(21) Application number: 21205506.5
(22) Date of filing: 29.10.2021
(51) Int. Cl.: A01M 7/00, A01B 79/00

(54) **METHOD FOR OPERATING AN AGRICULTURAL SPRAYER AND AGRICULTURAL SPRAYER**

(71) Applicant: Kverneland Group Nieuw-Vennep BV, 2153 LR Nieuw-Vennep (NL)
(72) Inventor: Vedder, Gert-Jan, 2461 GH Ter Aar (NL); Van der Krogt, René, 2415 BX Nieuwerbrug aan den Rijn (NL); Korsuize, Vincent, 2152 JK Nieuw-Vennep (NL); Konijn, Theodorus Ludovicus Simon, 1462 HD Middenbeemster (NL); Goedhuys, Jeffrey, 2593 ZL Den Haag (NL); Pommerening, Patrick, 59519 Möhnesee (DE)
(74) Representative: Bittner, Thomas L.

(57) **Abstract**

The present disclosure refers to a method for operating an agricultural sprayer and an agricultural sprayer, the method comprising: providing an agricultural sprayer having a sprayer system (1) comprising a sprayer boom (2) carrying a plurality of nozzles (3); providing a control device (4) having one or more data processors and a storage device and being configured to control operation of the agricultural sprayer; and applying a spray crop input by the plurality of nozzles (3) while operating the agricultural sprayer. The applying comprises: providing operation mode data indicative of a plurality of operation modes each assigned at least one weather parameter and a set of operation parameters for operating the agricultural sprayer for applying the spray crop input by the sprayer system; receiving operation mode input in the control device (4), the input being indicative of selecting a first operation mode from the plurality of operation modes assigned a first weather parameter and a first set of operation parameters; operating the agricultural sprayer for applying the spray crop input according to the first set of operation parameters; receiving weather condition input in the control device (4), the weather condition input being indicative of a present weather condition; determining whether the present weather condition is within a parameter range allowed for the first weather parameter in the control device (4); and if the present weather condition is determined not being within the parameter range, switching operation of the agricultural sprayer for applying the spray crop from the first operation mode to a second operation mode assigned a second set of operation parameters being different from the first set of operation parameters, wherein the agricultural sprayer is operated according to the second set of operation parameters in the second operation mode. (Figure)

## Description

The present disclosure refers to a method for operating an agricultural sprayer and an agricultural sprayer.

### Background

Agricultural sprayers are used for applying a spray crop input such as fertilizer, herbicides, fungicides, biocides or similar spraying material in the field of agricultural. The agricultural sprayer may be provided by an implement to be attached to a tractor. Alternatively, the agricultural sprayer may be provided as a self-propelled vehicle.

Document US 2009 / 0099737 A1 discloses an agricultural system which includes an agricultural implement with an application device for applying crop inputs. A data bus is connected to the agricultural implement, and an input device is connected to the data bus. A data storage device is connected to the data bus, and an application controller is connected to the application device. A processor is connected to the data bus and the application controller, where the processor applies inputs to the application controller to adjust and / or optimize in real time a current operation of the application device(s) in order to efficiently and accurately apply the crop inputs. In response to detecting wind speed information and wind direction information a droplet size of spray crop inputs sprayed by the nozzles may automatically be controlled to reduce drift of the spray crop input. In response to detecting a temperature information and a humidity information, such information may be used to automatically control the droplet size of the spray crop input sprayed by the nozzles to reduce a drift of the spray crop input. Also, in response to detecting wind speed information and wind direction information a height of the nozzle support boom of the agricultural sprayer may be automatically lowered.

### Summary

It is an object to provide a method for operating an agricultural sprayer and an agricultural sprayer which provide for improved automatic control of a plurality of operation parameters while distributing a spray crop input by a plurality of nozzles of the agricultural sprayer.

For solving the problem, a method for operating an agricultural sprayer and an agricultural sprayer according to independent claims 1 and 11, respectively, are provided. Further embodiments are disclosed in dependent claims.

According to one aspect, a method for operating an agricultural sprayer is provided, the method comprising: providing an agricultural sprayer having a sprayer system comprising a sprayer boom carrying a plurality of nozzles; providing a control device having one or more data processors and a storage device and being configured to control operation of the agricultural sprayer; and applying a spray crop input by the plurality of nozzles while operating the agricultural sprayer. The applying of the spray crop input is further comprising: providing operation mode data indicative of a plurality of operation modes each assigned a weather parameter and a set of operation parameters for operating the agricultural sprayer for applying the spray crop input by the sprayer system; receiving operation mode input in the control device, the operation mode input being indicative of selecting a first operation mode from the plurality of operation modes assigned a first weather parameter and a first set of operation parameters; operating the agricultural sprayer for applying the spray crop input according to the first set of operation parameters; receiving weather condition input in the control device, the weather condition input being indicative of a present weather condition; determining whether the present weather condition is within a parameter range allowed for the first weather parameter in the control device; and if the present weather condition is determined not being within the parameter range, switching operation of the agricultural sprayer for applying the spray crop from the first operation mode to a second operation mode assigned a second set of operation parameters being different from the first set of operation parameters, wherein the agricultural sprayer is operated according to the second set of operation parameters in the second operation mode.

According to another aspect, a an agricultural sprayer is provided, comprising: a sprayer system having a sprayer boom carrying a plurality of nozzles, and a control device having one or more data processors and a storage device and being configured to control application of spray crop input. For applying the spray crop input, the agricultural sprayer is configured to: provide operation mode data indicative of a plurality of operation modes each assigned a weather parameter and a set of operation parameters for operating the agricultural sprayer for applying the spray crop input; receive operation mode input in the control device, the operation mode input being indicative of selecting a first operation mode from the plurality of operation modes assigned a first weather parameter and a first set of operation parameters; operate the agricultural sprayer for applying the spray crop input according to the first set of operation parameters; receive weather condition input in the control device, the weather condition input being indicative of a present weather condition; determine whether the present weather condition is within a parameter range allowed for the first weather parameter in the control device; and if the first weather parameter is determined not being within the parameter range, switch operation of the agricultural sprayer for applying the spray crop from the first operation mode to a second operation mode assigned a second set of operation parameters being different from the first set of operation parameters, wherein the agricultural sprayer is operated according to the second set of operation parameters in the second operation mode.

According to the technology, a plurality of operation modes is provided each of the plurality of operation modes being assigned both a weather parameter and a set of operation parameters for operating the agricultural sprayer for applying the spray crop input by the sprayer system. Defining the set of operation parameters for the different operation modes in advance allows to comply with specific requirements regarding the application of the spray crop input by the agricultural sprayer. The set of operation parameters can be defined to ensure that such specific requirement(s) will be fulfilled if the specific set of operation parameters assigned to the operation mode is applied for controlling the agricultural sprayer. For example, the different sets of operation modes may be defined to comply with different (environmental) standards for applying the spray crop input in the field.

If the first weather parameter is determined to be outside of the parameter range assigned to the first weather parameter of the first operation mode, operation of the agricultural sprayer is automatically switched to the second operation mode being different from the first operation mode, thus, the first set of operation parameters being different from the second set of operation parameters. Rather than changing a single operation parameter for the agricultural sprayer, a different operation mode assigned a plurality of operation parameters is applied for controlling operation of the agricultural sprayer in response to determining the present weather condition not being within the parameter range of the first weather parameter. For both the first and the second operation mode application of a set of respective operation parameters is automatically ensured, thereby, specific standard for the application of the spray crop input can be established in the first operation mode as well as in the second operation mode.

The parameter range provided for the first weather parameter may define a lower and an upper limit for the parameter, thereby, defining a parameter range. Such definition of a parameter range may also apply to one or more of the operation parameters.

The method may further comprise continuing with operating the agricultural sprayer for applying the spray crop according to the first operation mode, if the present weather condition is determined being within the parameter range. In this embodiment it is determined that the present weather condition is within the parameter range. Thus, there is no need for switching the operation mode. Controlling of the operation of the agricultural sprayer will automatically continue with applying the set of first operation parameters. In response, a user of the agricultural sprayer may be informed through an user interface about continuing with applying the first operation mode.

For such or other embodiments, one or more weather conditions may be measured or determined regularly with a predetermined repetition rate or frequency. Following it is checked, whether the present weather condition is within the respective parameter range, or not. The frequency of determining the present weather condition may be changed from a first frequency value to a second frequency value being different from the first frequency value in response to detecting some weather condition indicative of potential weather change or some dangerous weather situation such as some thunder storm. For example, the second frequency value may refer to higher frequency compared to the first frequency value.

The method may further comprise determining the present weather condition being different from a former weather condition determined at a time of starting operating the agricultural sprayer for applying the spray crop input according to the first set of operation parameters assigned to the first operation mode. Application of the first operation mode may be conducted in response to the former weather condition, which is determined to be within the parameter range of the first weather parameter assigned to the first operation mode. Because of receiving the present whether condition which is different from the former weather condition, it is determined whether the present weather condition is (still) within the parameter range of the first weather parameter assigned to the first operation mode. Depending on whether the present weather condition is within or outside of the parameter range, there is switching or continuation with applying the first operation mode.

In an embodiment, the method may further comprise determining whether the present weather condition is within a parameter range allowed for a second weather parameter assigned to both the second operation mode and the second set of operation parameters in the control device prior to switching the operation of the agricultural sprayer from the first operation mode to the second operation mode. The parameter range allowed for the second weather parameter is different from the parameter range allowed for the first weather parameter. The second weather parameter together with the second set of operation parameters being different from the first set of operation parameters is assigned to the second operation mode. Thus, in case of the present weather condition leaving or falling outside the parameter range of the first weather parameter and "moving into" the parameter range assigned to the second weather parameter, the operation mode is switched, thereby, changing the set of operation modes applied for controlling operation of the agricultural sprayer.

The method can further comprise the following: assigning each of the plurality of operation modes an environmental grade parameter from a plurality of environmental grade parameters; receiving, with receiving the operation mode input, a grade selection input in the control device, the grade selection being indicative of selecting a first environmental grade parameter assigned the first operation mode from the plurality of operation modes; and if the first weather parameter is determined not being within the parameter range, switching operation of the agricultural sprayer for applying the spray crop by conducting at least one of switching from the first operation mode assigned the first environmental grade parameter to the second operation mode assigned a second environmental grade parameter different from the first environmental grade, and switching from the first operation mode assigned the first environmental grade parameter to the second operation mode also assigned the first environmental grade parameter.

In the embodiment the plurality of operation modes represents a plurality of environmental grade parameters or codes which may also referred to as environmental scores. An environmental grade parameter only a single mode of operation may be assigned. Alternatively, at least two different modes of operation are assigned to one and the same environmental grade parameter. Thus, in case the first weather parameter is found not being within the parameter range, there is change from the first operation mode assigned the first environmental grade parameter to the second operation mode which is either assigned also the first environmental grade parameter or, alternatively, the second environmental grade parameter being different from the first environmental grade parameter. Thus, requirements defined by some specific environmental grade parameter can still be fulfilled despite changing the operation mode.

Similarly, a single operation mode may qualify for (be assigned to) more than one environmental grade parameter. For example, an operation mode assigned to some environmental grade parameter requiring high environmental standard may likely also qualify for some other environmental grade parameter requiring lower environmental standard and, therefore, may be assigned the other environmental grade parameter as well (e.g. in addition).

In an alternative embodiment the following may be provided: assigning an environmental grade parameter from a plurality of environmental grade parameters to a combination of a weather condition and an operation mode. Thus, each of environmental grade parameters is characterized by or has assigned some individual combination of a weather condition and an operation mode, such combination being different for all environmental grade parameters from the plurality of environmental grade parameters. In response to determining the present weather condition not being within the parameter range allowed for the first weather parameter, at least one of the following may apply: switching from a first environmental grade parameter to a second environmental grade parameter because of the change of the weather condition, but keeping or continuing with the operation mode applied before detecting the change of the weather condition; and switching from the first environmental grade parameter to the second environmental grade parameter because of change of the operation mode in response to detecting the change of the weather condition already.

In response to being informed by user output that the change of the weather condition (present weather condition) requires change of mode of operation, by user input the user may determine continuing with the current operation mode, thereby, preventing change of node of operation, but causing change of the environmental grade parameter due to change of the weather condition.

Thus, if the present weather condition is determined not being within the parameter range allowed for the first weather parameter, the environmental grade parameter may change due the change of the weather condition or due to change of operation mode for the agricultural sprayer.

For example, different environmental grade parameters may allow for or define different total amounts of spray crop input to be sprayed by the sprayer system per time unit such as per hour. In an alternative embodiment, the different environmental grade parameters may be assigned different total amounts allowed to be sprayed to some crop in the field over a total crop growing period. In still another embodiment, the different environmental grade parameters may be indicative of different environmental condition in the field where the spray crop input is applied. For example, a first environmental grade parameter may be assigned to some field area being located close to some lake or some other water area, while a second environmental grade parameter which is different from the first environmental grade parameter is assigned to a second field being distant from any water area. The different modes of operation each being assigned different weather parameter and different sets of operation parameters allow for applying different environmental standards indicated by the environmental grade parameter to the field areas.

In the different embodiments, the environmental grade or score may be referred to as "Grade / Class A", "Grade / Class B" and so on indicating different grades of sustainability or environmental friendliness.

With respect to the different embodiments, for agricultural spraying field operation data may be generated and stored in a memory device, the field operation data being indicative of some plant grown on the field and one or more environmental grade parameters applied in the course of one or more treatment cycles during the growing period for the plant in the time from planting to harvesting. Thus, the field operation data provide historical data about the details of plant treatment by spraying with respect to the environmental grade parameter applied in operation of the sprayer to the specific plant. From the field operation data product data may be generated which is assigned to the plant harvested, and, for example, may be printed on a packaging of the (harvested) plant (such as vegetable) indicating the environmental grade parameter(s) applied for such product.

The environmental grade parameter, with respect to the applying the spray input according to the operation mode assigned to the environmental grade parameter, may indicative of at least one of the following: a level of sustainability, and a level of environmental degradation. Depending on the level of sustainability, for example, the total amount of spray crop input allowed to be sprayed may be different.

Prior to switching the operation of the agricultural sprayer from the first operation mode to the second operation mode, the method may further comprise: outputting output data through a user interface connected to the control device, the output data being indicative of a proposal to switch from the first operation mode to the second operation mode; and receiving input data through the user interface. The input data are indicative of one of the following: user confirmation input confirming switching from the first operation mode to the second operation mode; user blockage input preventing the control device from the first operation mode to the second operation mode; user compensation input defining a parameter change for at least one operation parameter from the first set of operation parameters, wherein the parameter change is configured to apply an amended first operation mode compensating for amended operation condition for applying the spray crop input due to the present weather condition; and user selection input selecting at least one of a third environmental grade parameter being different from both the first and second environmental grade parameter and a third operation mode being different from both the first and second operation mode.

In the embodiment the user is asked for user input in response to determining the present weather condition being not within the parameter range prior to switching between the different operation modes. The user may confirm the proposal for operation mode switching. Alternatively, the user may block or prevent such switching, for example, because of switching to the second operation mode would not comply with environmental standards in the field area in which the agricultural sprayer is located presently. The user may allow switching later after the agricultural sprayer has moved to a different field area for which the second operation mode is allowed. Such combination of blocking and (later) switching may also be implemented as automatic control by detecting location information for the agricultural sprayer, for example by means of a GPS system, and processing field information indicative of different field areas and different operation modes allowed for one or more field areas, but not for one or more other field areas.

If the user selection input is received, the method may further comprise determining whether the present weather condition is within a parameter range allowed for a third weather parameter assigned to both the third operation mode and the third set of operation parameters in the control device. If the user selects the third environmental grade parameter (third operation mode), it will be checked whether the present weather condition allows for such switching, i.e. whether the present weather condition is within a parameter range allowed for the third weather parameter assigned to the third operation mode. If it is determined that the present weather condition is not within the parameter range of the third weather parameter, the user may be informed by output data through the user interface accordingly.

The method may further comprise providing: (i) at least one operation parameter from the first set of operation parameters with a first parameter range allowed for the at least one operation parameter in the first operation mode; and (ii) the at least one operation parameter from the second set of operation parameters with a second parameter range allowed for the at least one operation parameter in the second operation mode, wherein the second parameter range is different from the first parameter range. One or more of the operation parameters from the different sets of operation parameters may have assigned a respective parameter range (between lower and upper limits). Thus, such operation parameter may be amended or changed within such parameter range, the operation mode still being the same.

The method may further comprise providing the weather condition input by a mobile weather station provided on the agricultural sprayer. For this or other embodiments, the agricultural sprayer may be provided by an implement to be attached to a tractor for moving on the field. Alternatively, the agricultural sprayer may be a self-propelled vehicle. The mobile weather station configured to detect weather condition while the spray crop input is dispensed in the field may be provided on one of the tractor and the agricultural implement sprayer, for example, in a location close to the plurality of nozzles.

One or more of the following weather conditions may be detected: wind speed, wind direction, temperature, and humidity. The weather parameter assigned to a operation mode may indicative of one or more of such weather conditions.

With respect to the agricultural sprayer, the different embodiments disclosed above for the method of operating the agricultural sprayer may be applied mutatis mutandis.

### Description of further embodiments

Following, further embodiments are described by reference to a figure.

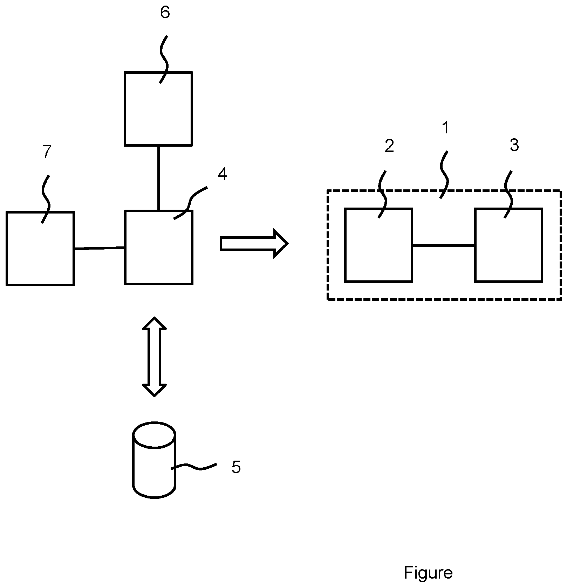

The figure shows a schematic representation of functional components or modules of an arrangement for controlling operation of an agricultural sprayer configured to spray a spray crop input (spraying material) such as fertilizer in the field. Spray crop input may be applied to some crop once or several times during a (total) crop growing period from seeding or planting to harvesting. In the course of the crop growing period only one type of spray crop input may be sprayed to the crop. Alternatively, a plurality of different spray crop input may be applied.

The agricultural sprayer is having a sprayer system 1 having a sprayer boom 2 and a plurality of nozzles 3 provided on the sprayer boom 2 as it is knowns as such. A control device 4 is provided for automatically controlling operation of the sprayer system 1, the control device being implemented on the agricultural sprayer and / or a tractor attached to the agricultural sprayer. The control device 4 comprises one or more data processors for processing data or signals, for example measurement data, and a data storage device for storing electronic data. The data storage device may be implemented at least in part together with the control device 4. Alternatively or in addition, the data storage device may be implemented separately from the control device 4. The control device 4 may be accessing a remote data storage device by wireless data communication. Further, the control device 4 may be configured to exchange data with other remote data sources 5 such as a server device by at least one of wireless and wired data communication. The control device 4 may be implemented on the agricultural sprayer alone. Alternatively, functional elements of the control device 4 may be implemented on a tractor (not shown) to which an implement providing for the agricultural sprayer is attached.

A mobile weather station 6 is provided, for example, on the agricultural sprayer, for detecting local weather conditions while the agricultural sprayer is spraying the spray crop input in the field. In addition, additional weather information may be provided from some other remote weather data source, such additional weather information, for example, being indicative of some weather forecast.

A user interface 7 is provided to present output data to a user, for example through a display, and receive user input through a user input device such as a touch sensitive display device and / or some touch pad.

The agricultural sprayer may be controlled according to different operation modes each of the operation modes being assigned both a weather parameter and a set of operation parameters. The operation parameters may be selected from the following group of operation parameters: size of the droplets dispensed by the nozzles 3, height of the sprayer boom 2, frequency of dispensing droplets from the nozzles 3, type of nozzles 3, number of nozzles 3 activated or deactivated, and activation or deactivation of a wind drift technology.

Each of the operation modes, in addition to the set of operation parameters, is assigned at least one weather parameter. The weather parameter may be assigned a parameter range defining a lower and an upper limit for the weather parameter. The weather parameter may be indicative of at least one of the following: wind speed, wind direction, temperature, humidity, rain, and sunshine intensity.

In operation of the agricultural sprayer, an operation mode can be selected from the plurality of different operation modes in dependence on a present weather condition detected by the mobile weather station 6. If the present weather condition falls into the parameter range of a weather parameter assigned to some specific operation mode, the set of operation parameters assigned to such operation mode is be applied by the control device 4 for operating the agricultural sprayer.

If the present weather condition indicates some change compared to a formerly detected weather condition, the operation mode can automatically be switched. For example, if wind speed information detected by the mobile weather station 6 indicates wind speed exceeding a threshold value limiting the parameter range for the weather parameter of some operation mode, it may be automatically switched to a different mode of operation for which the respective weather parameter will fit to the presently detected wind speed. Similarly, in addition or as in alternative, temperature information, and humidity information may be detected by the mobile weather station 6 and processed by the control device 4.

The features disclosed in this specification, the figures and / or the claims may be material for the realization of various embodiments, taken in isolation or in various combinations thereof.

## Claims

1. Method for operating an agricultural sprayer, comprising
- providing an agricultural sprayer having a sprayer system (1) comprising a sprayer boom (2) carrying a plurality of nozzles (3);
- providing a control device (4) having one or more data processors and a storage device and being configured to control operation of the agricultural sprayer; and
- applying a spray crop input by the plurality of nozzles (3) while operating the agricultural sprayer, comprising:
- providing operation mode data indicative of a plurality of operation modes each assigned at least one weather parameter and a set of operation parameters for operating the agricultural sprayer for applying the spray crop input by the sprayer system;
- receiving operation mode input in the control device (4), the operation mode input being indicative of selecting a first operation mode from the plurality of operation modes assigned a first weather parameter and a first set of operation parameters;
- operating the agricultural sprayer for applying the spray crop input according to the first set of operation parameters;
- receiving weather condition input in the control device (4), the weather condition input being indicative of a present weather condition;
- determining whether the present weather condition is within a parameter range allowed for the first weather parameter in the control device (4); and
- if the present weather condition is determined not being within the parameter range, switching operation of the agricultural sprayer for applying the spray crop from the first operation mode to a second operation mode assigned a second set of operation parameters being different from the first set of operation parameters, wherein the agricultural sprayer is operated according to the second set of operation parameters in the second operation mode.

2. Method for operating the agricultural sprayer of claim 1, further comprising if the present weather condition is determined being within the parameter range, continuing with operating the agricultural sprayer for applying the spray crop according to the first operation mode.

3. Method for operating the agricultural sprayer of claim 1 or 2, further comprising determining the present weather condition being different from a former weather condition determined at a time of starting operating the agricultural sprayer for applying the spray crop input according to the first set of operation parameters assigned to the first operation mode.

4. Method for operating the agricultural sprayer of at least one of the preceding claims, further comprising, prior to switching the operation of the agricultural sprayer from the first operation mode to the second operation mode, determining whether the present weather condition is within a parameter range allowed for a second weather parameter assigned to both the second operation mode and the second set of operation parameters in the control device (4).

5. Method for operating the agricultural sprayer of at least one of the preceding claims, further comprising:
- assigning each of the plurality of operation modes an environmental grade parameter from a plurality of environmental grade parameters;
- receiving, with receiving the operation mode input, a grade selection input in the control device (4), the grade selection being indicative of selecting a first environmental grade parameter assigned the first operation mode from the plurality of operation modes; and
- if the first weather parameter is determined not being within the parameter range, switching operation of the agricultural sprayer for applying the spray crop by conducting at least one of
- switching from the first operation mode assigned the first environmental grade parameter to the second operation mode assigned a second environmental grade parameter different from the first environmental grade, and
- switching from the first operation mode assigned the first environmental grade parameter to the second operation mode also assigned the first environmental grade parameter.

6. Method for operating the agricultural sprayer of claim 5, wherein the environmental grade parameter, with respect to the applying the spray input according to the operation mode assigned to the environmental grade parameter, is indicative of at least one of the following: a level of sustainability, and a level of environmental degradation.

7. Method for operating the agricultural sprayer of at least one of the preceding claims, further comprising, prior to switching the operation of the agricultural sprayer from the first operation mode to the second operation mode:
- outputting output data through a user interface connected to the control device (4), the output data being indicative of a proposal to switch from the first operation mode to the second operation mode; and
- receiving input data through the user interface, the input data being indicative of one of the following:
- user confirmation input confirming switching from the first operation mode to the second operation mode;
- user blockage input preventing the control device (4) from the first operation mode to the second operation mode;
- user compensation input defining a parameter change for at least one operation parameter from the first set of operation parameters, wherein the parameter change is configured to apply an amended first operation mode compensating for amended operation condition for applying the spray crop input due to the present weather condition; and
- user selection input selecting at least one of a third environmental grade parameter being different from both the first and second environmental grade parameter and a third operation mode being different from both the first and second operation mode.

8. Method for operating the agricultural sprayer of claim 7, further comprising, if the user selection input is received, determining whether the present weather condition is within a parameter range allowed for a third weather parameter assigned to both the third operation mode and the third set of operation parameters in the control device (4).

9. Method for operating the system of at least one of the preceding claims, further comprising providing
- at least one operation parameter from the first set of operation parameters with a first parameter range allowed for the at least one operation parameter in the first operation mode; and
- the at least one operation parameter from the second set of operation parameters with a second parameter range allowed for the at least one operation parameter in the second operation mode, wherein the second parameter range is different from the first parameter range.

10. Method for operating the system of at least one of the preceding claims, further comprising providing the weather condition input by a mobile weather station provided on the agricultural sprayer.

11. An agricultural sprayer, comprising
- a sprayer system (1) having a sprayer boom (2) carrying a plurality of nozzles (3); and
- a control device (4) having one or more data processors and a storage device and being configured to control application of spray crop input;
wherein, for applying the spray crop input, the agricultural sprayer is configured to:
- provide operation mode data indicative of a plurality of operation modes each assigned a weather parameter and a set of operation parameters for operating the agricultural sprayer for applying the spray crop input;
- receive operation mode input in the control device (4), the operation mode input being indicative of selecting a first operation mode from the plurality of operation modes assigned a first weather parameter and a first set of operation parameters;
- operate the agricultural sprayer for applying the spray crop input according to the first set of operation parameters;
- receive weather condition input in the control device (4), the weather condition input being indicative of a present weather condition;
- determine whether the present weather condition is within a parameter range allowed for the first weather parameter in the control device (4); and
- if the first weather parameter is determined not being within the parameter range, switch operation of the agricultural sprayer for applying the spray crop from the first operation mode to a second operation mode assigned a second set of operation parameters being different from the first set of operation parameters, wherein the agricultural sprayer is operated according to the second set of operation parameters in the second operation mode.
